# EUROPEAN PATENT APPLICATION

(11) **EP 1 284 518 A1**
(43) Date of publication of application: **19.02.2003**
(21) Application number: 01119596.3
(22) Date of filing: 16.08.2001
(51) Int. Cl.: H01M 8/10

(54) **Reinforced composite ionic conductive polymer membrane and fuel cell adopting the same**

(71) Applicant: SAMSUNG ELECTRONICS CO., LTD., Suwon-City, Kyungki-do (KR)
(72) Inventor: Kim, Hae-kyoung, Paldal-gu, Suwon-city, Kyungki-do (KR)
(74) Representative: Patentanwälte Ruff, Wilhelm, Beier, Dauster & Partner

(57) **Abstract**

A reinforced composite ionic conductive polymer membrane, and a fuel cell with improved efficiency by adopting the reinforced composite ionic conductive polymer membrane are provided. The reinforced composite ionic conductive polymer membrane includes: a porous support; an ion-exchange polymer that impregnates the porous support; and a reinforcing agent that impregnates the porous support, the reinforcing agent including a moisture retentive material and/or a catalyst for facilitating oxidation of hydrogen.
The moisture retentive material comprises at least one selected from the group consisting of SiO₂,TiO₂,ZiO₂, mordenite, tin oxide, and zeolite, and the catalyst comprises at least one selected from the group consisting of platinum (Pt), palladium (Pd), ruthenium (Ru), rhodium (Rh), iridium (Ir), gold (Au), and a Pt/Ru alloy.

## Description

### BACKGROUND OF THE INVENTION

### 1. Field of the Invention

The present invention relates to a reinforced composite ionic conductive polymer membrane and a fuel cell adopting the same, and more particularly, to a reinforced composite ionic conductive polymer membrane, which is improved in ionic conductivity, moisture retention, and reduced cross-over of liquid fuel by addition of a reinforcing agent, and a fuel cell with improved efficiency by adopting the reinforced composite ionic conductive polymer membrane.

### 2. Description of the Related Art

Recent advances in portable electronic devices, wireless communications devices, and fuel cell based vehicles have increased the need for development of a reliable, high-performance fuel cell workable at room temperature.

Fuel cells as a new power generating system that converts energy produced through electrochemical reactions of fuel and oxidative gas directly into electric energy include a fuel cell with molten carbonate salt, which is operable at a high temperature of 500-700°C, a fuel cell with phosphoric acid operable around 200°C, an alkaline electrolyte fuel cell operable between room temperature and less than 100°C, a solid polymer electrolyte (SPE) fuel cell operable at a temperature of 600-100°C, and a solid oxide fuel cell operable at a temperature of 600-1000°C.

SPE fuel cells include proton-exchange membrane fuel cells (PEMFCs) using hydrogen gas as a fuel source and direct methanol fuel cells (DMFCs) which generate power by liquid methanol solution which is directly applied to the anode as a fuel source.

The PEMFC, which is emerging as the next generation of a clean energy source alternative to fossil fuels has a high power density and high-energy conversion efficiency. In addition, the PEMFC is workable at room temperature and is easy to seal and miniaturize, so it can be extensively applied to the fields of zero emission vehicles, power generating systems for home appliances, mobile telecommunications equipment, medical equipment, military equipment, equipment in space, and portable power generating systems.

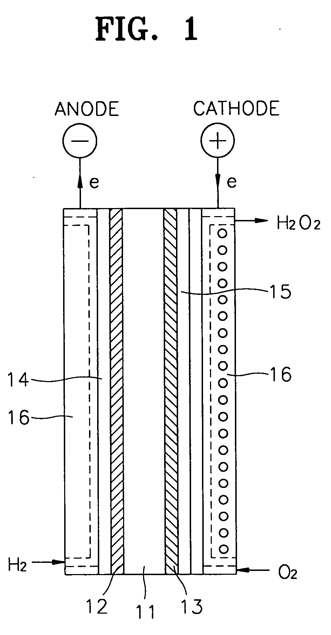

The basic structure of the PEMFC as a power generator for producing direct current through electrochemical reaction of hydrogen and oxygen is shown in FIG. 1. Referring to FIG. 1, the PEMFC has a proton-exchange membrane 11 interposed between the anode and the cathode. The proton-exchange membrane 11 is formed of an SPE with a thickness of 20-200µm. The anode and cathode includes anode and cathode backing layers 14 and 15, respectively, for supplying fuel gases, and catalyst layers 12 and 13, respectively, for oxidation/reduction of the fuel gases, forming gas diffusion electrodes (hereinafter, the anode and cathode will be referred to as "gas diffusion electrodes"). In FIG. 1, reference numeral 16 represents a current collector.

As hydrogen, used as a reaction gas, is supplied to the PEMFC having the structure described above, hydrogen molecules are decomposed into protons and electrons by an oxidation reaction in the anode. The protons move to the cathode through the proton-exchange membrane 11. Meanwhile, in the cathode, oxygen molecules take electrons from the anode and are reduced to oxygen ions by reduction. The oxygen ions react with protons from the anode to produce water.

As shown in FIG. 1, in the gas diffusion electrodes of the PEMFC, the catalyst layers 12 and 13 are formed on the anode and cathode backing layers 14 and 15, respectively. The anode and cathode backing layers 14 and 15 are formed of carbon cloth or carbon paper. The surfaces of the anode and cathode backing layers 14 and 15 are treated for easy reaction gas access and for water permeability to the proton-exchange membrane 11.

The DMFC has the same structure as the PEMFC described above, but uses liquid methanol, instead of hydrogen, as a fuel source. As methanol is supplied to the anode, an oxidation reaction occurs in the presence of a catalyst to generate protons, electrons, and carbon dioxide. Although the DMFC has lower energy efficiency than the PEMFC, use of a liquid fuel in the DMFC makes application to portable electronic devices easier.

In the fuel cells described above, an ionic conductive polymer membrane is used as a proton-exchange membrane interposed between the anode and the cathode. The ionic conductive polymer membrane is formed of a polymer electrolyte having a sulfonic acid group, and retains water. As the sulfonic acid group is dissociated from the molecular structure in the water medium to form a sulfonyl group, the ionic conductive polymer membrane has ionic conductivity.

The more sulfonic acid groups existing in the polymer electrolyte and the greater the amount of water incorporated into the polymer electrolyte, the greater the degree of dissolution of the sulfonyl group and the greater the ionic conductivity. For this reason, it is preferable to use a highly sulfonated polymer electrolyte as the proton-exchange membrane.

However, it is difficult to process highly sulfonated polymers into a film. Thus, it is necessary to adjust the degree of sulfonation of the polymer within a predetermined range to attain good ionic conductivity and easy of processiblity into film.

As the working temperature is raised, the ionic conductive polymer membrane can become dry, even though catalytic activity becomes high and ionic conduction is facilitated. The drying of the ionic conductive polymer membrane can be compensated for, to some extent, by using a humidified fuel source, but such a humidified fuel source cannot be applied to a room-temperature workable cell. This is because the temperature of the cell is raised by the humidified fuel source, and thus the cell cannot operate at room temperature. In addition, a fuel humidifying system is required for the cell to supply the humidified fuel source.

To account for this problem, preparation of an ionic conductive polymer membrane by impregnating ion-exchange polymers into a porous support has been suggested. Forming the ionic conductive polymer membrane itself is easy with this method, but moisture retention by the ionic conductive polymer membrane is limited. Thus, an ionic conductive polymer membrane with excellent moisture retention and capable of being easily formed into a film cannot be obtained by conventional methods at this time.

Also, the DMFC has a problem of performance reduction due to low fuel efficiency caused by cross-over of methanol through the ionic conductive polymer membrane.

### SUMMARY OF THE INVENTION

To solve the above-described problems, it is a first object of the present invention to provide a reinforced composite ionic conductive polymer membrane in which a reinforcing agent is added to provide excellent ionic conductivity and easy-of-film formation.

It is a second object of the present invention to provide a fuel cell with improved efficiency by adopting a reinforced composite ionic conductive polymer membrane.

It is a third object of the present invention to provide a direct methanol fuel cell (DMFC) with improved efficiency by reducing cross-over of methanol.

To achieve the first object of the present invention, there is provided a reinforced composite ionic conductive polymer membrane comprising: a porous support; an ion-exchange polymer that impregnates the porous support; and a reinforcing agent that impregnates the porous support, the reinforcing agent being at least one selected from the group consisting of a moisture retentive material and a catalyst for facilitating oxidation of hydrogen.

It is preferable that the reinforced composite ionic conductive polymer is formed by impregnating or spray-coating the porous support with a composition of the ion-exchange polymer and the reinforcing agent.

The second object of the present invention is achieved by a fuel cell having the reinforced composite ionic conductive polymer membrane.

The third object of the present invention is achieved by a DMFC having the reinforced composite ionic conductive polymer membrane.

In the DMFC, It is preferable that the porous support of the reinforce composite ionic conductive polymer membrane includes at least one polymer membrane having 30% or more porosity selected from the group consisting of polytetrafluoroethylene, vinylidenefluoride-hexafluoropropylene copolymer, polypropylene, polyethylene, and polysulfone, and a proton exchange functional group such as a carboxyl group, sulfonic acid group, phosphoric acid group, or perchloric acid group.

### BRIEF DESCRIPTION OF THE DRAWINGS

The above objects and advantages of the present invention will become more apparent by describing in detail preferred embodiments thereof with reference to the attached drawings in which:
FIG. 1 shows the structure of a proton-exchange membrane fuel cell;
FIG. 2 is a graph showing variations in ionic conductivity with respect to temperature for reinforced composite ionic conductive polymer membranes formed in Comparative Example 1 and Examples 1 and 2 according to the present invention;
FIG. 3 is a graph showing variations in cell potential with respect to current density for proton-exchange membrane fuel cells (PEMFCs) formed in Comparative Example 2 and Example 12 according to the present invention;
FIG. 4 is a graph showing variations in cell potentials with respect to current density for a direct methanol fuel cell (DMFC) formed in Example 18;
FIG. 5 is a graph comparatively showing methanol cross-over between the DMFC of Example 18 and a conventional polymer membrane; and
FIG. 6 is a graph comparatively showing cell efficiency between the conventional polymer membrane and DMFCs of Examples 18 and 19.

### DETAILED DESCRIPTION OF THE INVENTION

Proton-exchange membrane fuel cells (PEMFCs) or direct methanol fuel cells (DMFCs) need to have high ionic conductivity, good moisture retention, and low methanol permeability.

According to the present invention, an ionic conductive polymer membrane is formed by impregnating a moisture retentive material and/or a catalyst for facilitating oxidation of hydrogen as a reinforcing agent along with an ion-exchange polymer (ionomer) into a porous support. In addition, to reduce cross-over of methanol through the polymer membrane, the ionic conductive polymer membrane according to the present invention has low methanol permeability.

Suitable ion-exchange polymer include sulfonated perfluorinated polymers, partially fluorinated polymers, and non-fluorinated polymers. In the present invention, it is preferable that the ion-exchange polymer has at least one selected from the group consisting a sulfonic acid group (SO₃H), carboxyl (COOH) group, phosphoric acid (H₃PO₄) group, and perchloric acid group (HClO₄), as a reactive site and an equivalent weight of 600-1200 g/H⁺. If the equivalent weight of the ion-exchange polymer is less than 600 g/H⁺, membrane formation is not easy, and the ion-exchange polymer tends to aggregate when it impregnates the porous support. If the equivalent weight of the ion-exchange polymer exceeds 1200 g/H⁺, it is undesirable for sufficient ionic conduction.

The moisture retentive material having excellent moisture retention includes at least one selected from the group consisting of SiO₂, TiO₂, ZiO₂, mordenite, tin oxide, and zeolite. The catalyst for facilitating electrochemical reactions of reactant gases provided to the electrodes will be described in detail below.

Hydrogen supplied to the fuel cell is decomposed into protons and electrons by oxidation at the anode. Irrespective of whether hydrogen is oxidized or not at the anode, the protons change back into hydrogen when passed through the ion-exchange polymer membrane. Here, this inefficiency can be eliminated by addition of a catalyst that facilitates the oxidation of hydrogen. The catalyst includes at least one selected from the group consisting of platinum (Pt), palladium (Pd), ruthenium (Ru), rhodium (Rh), iridium (Ir), gold (Au), and a Pt/Ru alloy.

When both the moisture retentive material and the catalyst are used as the reinforcing agent, it is preferable that 3-90% moisture retentive material and 10-97% catalyst by weight are used. If the amount of moisture retentive material is less than 3% by weight, moisture retention effects are negligible. If the amount of moisture retentive material is greater than 90% by weight, it is impossible to form the polymer membrane due to poor processiblity into membrane.

The porous support may have 30% or greater porosity, preferably 30-80%, and a pore size in the range from hundreds of nanometers to a few micrometers. The porous support may be formed as a continuous polymer sheet or a fabric or non-woven fabric with a thickness of 5-50µm. If the porous support has porosity less than 30%, the amount of ion-exchange polymer impregnated into the same is limited, resulting in poor ionic conductivity. The porous support is formed of at least one polymer selected from the group consisting of polytetrafluoroethylene (PTFE), vinylidenefluoride-hexafluoropropylene copolymer, polypropylene, polyethylene, and polysulfone.

Alternatively, the porous support may be formed by incorporating a proton exchange functional group into at least one porous polymer layer selected from the group consisting of PTFE, vinylidenefluoride-hexafluoropropylene copolymer, polypropylene, polyethylene, and polysulfone. In this case, the functional group may be a carboxyl group, sulfonic acid group, phosphoric acid group, or perchloric acid group. By grafting a sulfonic acid, phosphoric acid, perchloric acid, or carboxyl side chain into the porous support, an increased amount of the ion-exchange polymer can impregnate the porous support.

A method for forming an reinforced composite ionic conductive polymer membrane according to the present invention will now be described.

First, a porous support is pretreated as needed. This pretreatment is performed for easy permeation of the ion-exchange polymer and the catalyst for activating reactions at the electrodes into the porous support and for improved moisture retention. The porous support is soaked into a solvent capable of improving moisture retention and dried for use. Suitable solvents include ethanol and isopropanol. Alternatively, to provide the porous support with proton exchangeability, the porous support may be pretreated by light radiation or by grafting sulfonic acid, phosphoric acid, perchloric acid, or carboxyl side chain.

When a mixture of the ion-exchange polymer and the catalyst is used as the reinforcing agent, it is advantageous to apply ultrasonic wave to obtain a uniform mixture. After uniformly mixing the ion-exchange polymer and catalyst mixture, a solvent is added to the mixture to obtain slurry. The solvent added to the mixture is preferably the same as that used for the pretreatment of the porous support for easy and stable impregnation of the ion-exchange polymer and catalyst slurry into the voids of the porous support.

The porous support is impregnated with the slurry by soaking for a predetermined period of time or by spray coating, and is followed by drying. The drying temperature varies according to the solvent used. The drying temperature is preferably greater than the boiling point of the solvent and lower than a softening temperature of the ion-exchange polymer used. When an alcoholic solvent is used and a sulfonated perfluorinated polymer is used, the drying temperature is preferably in the range of 60-130°C. If the drying temperature is less than 60°C, it takes much time to dry the solvent. If the drying temperature is greater than 130°C, the ion-exchange polymer may be oxidized at that temperature, which may exceed the softening temperature.

In the method for forming the reinforced composite ionic conductive polymer membrane according to the present invention, the ion-exchange polymer and the reinforcing agent are impregnated into voids of the porous support, and the solvent is evaporated to complete a desired reinforced composite ionic conductive polymer membrane.

A fuel cell according to the present invention is manufactured by interposing the reinforced composite ionic conductive polymer membrane between the anode and the cathode to form a single cell.

When the fuel cell with the reinforced composite ionic conductive polymer membrane is formed as a DMFC, suitable porous supports may include at least one polymer membrane having 30% or more porosity selected from the group consisting of PTFE, vinylidenefluoride-hexafluoropropylene copolymer, polypropylene, polyethylene, and polysulfone. The polymer membranes for the porous support preferably have at least one of carboxyl group, sulfonic acid group, phosphoric acid group, and perchloric acid group. These porous supports have low methanol permeability, and thus cross-over of the methanol through the ionic conductive polymer membrane can markedly be reduced.

The present invention will be described in greater detail by means of the following examples. The following examples are for illustrative purposes and are not intended to limit the scope of the invention.

### Example 1

A microporous polytetrafluoroethylene (PTFE) support having 40% porosity was soaked in ethanol for 30 minutes and dried at 60°C in a drying oven.

A Nafion dispersion solution (available from DuPont) for perfluorinated membrane and silica were mixed thoroughly for 2 hours with application of ultrasonic wave, and ethanol was added to the mixture to obtain reinforced membrane slurry.

The microporous PTFE support was soaked in the reinforced membrane slurry for 2-3 hours and dried at 60°C in a drying oven to form a reinforced composite ionic conductive polymer membrane.

### Example 2

A reinforced composite ionic conductive polymer membrane was formed in the same manner as in Example 1 except that platinum (Pt) instead of silica was used.

### Example 3

A reinforced composite ionic conductive polymer membrane was formed in the same manner as in Example 1 except that Pt was further added to the reinforced membrane slurry.

### Examples 4 through 7

Reinforced composite ionic conductive polymer membranes were formed in the same manner as in Example 1 except that mordenite, titania, zirconia, and zeolite were used for Examples 4 through 7, respectively, instead of silica.

### Example 8

A microporous PTFE support having 40% porosity was soaked in ethanol for 30 minutes and dried at 60°C in a drying oven.

A Nafion dispersion solution (available from DuPont) for perfluorinated membrane and silica were mixed thoroughly for 2 hours with application of ultrasonic wave, and ethanol was added to the mixture to obtain reinforced membrane slurry.

The microporous PTFE support was spary-coated with the reinforced membrane slurry and dried at 60°C in a drying oven to form a reinforced composite ionic conductive polymer membrane.

### Example 9

A microporous carboxylated (-COOH) polyethylene (PE) support having 70% porosity was soaked in ethanol for 30 minutes and dried at 60°C in a drying oven.

A Nafion dispersion solution (available from DuPont) for perfluorinated membrane and silica were mixed thoroughly for 2 hours with application of ultrasonic wave, and ethanol was added to the mixture to obtain reinforced membrane slurry.

The microporous PE support was soaked in the reinforced membrane slurry for 2-3 hours and dried at 60°C in a drying oven to form a reinforced composite ionic conductive polymer membrane.

### Example 10

A microporous carboxylated (-COOH) PE support having 70% porosity was soaked in ethanol for 30 minutes and dried at 60°C in a drying oven.

A Nafion dispersion solution (available from DuPont) for perfluorinated membrane and Pt were mixed thoroughly for 2 hours with application of ultrasonic wave, and ethanol was added to the mixture to obtain reinforced membrane slurry.

The microporous PE support was soaked in the reinforced membrane slurry for 2-3 hours and dried at 60°C in a drying oven to form a reinforced composite ionic conductive polymer membrane.

### Example 11

A microporous sulfonated PE support having 70% porosity was soaked in ethanol for 30 minutes and dried at 60°C in a drying oven.

A Nafion dispersion solution (available from DuPont) for perfluorinated membrane and silica were mixed thoroughly for 2 hours with application of ultrasonic wave, and ethanol was added to the mixture to obtain reinforced membrane slurry.

The microporous PE support was soaked in the reinforced membrane slurry for 2-3 hours and dried at 60°C in a drying oven to form a reinforced composite ionic conductive polymer membrane.

### Comparative Example 1

A reinforced composite ionic conductive polymer membrane was formed in the same manner as in Example 1 except that silica was excluded.

Ion conductivity was measured for the reinforced composite ionic conductive membranes formed in Examples 1 and 2 and Comparative Example 1. The results are shown in Table 1 and FIG. 1. The ionic conductivity was measured using a 4-point probe technique at 30°C, 50°C, and 70°C.

**Table 1**

| Example | Ionic Conductivity (S/cm) | | |
|---|---|---|---|
| | 30°C | 50°C | 70°C |
| Example 1 | 0.0217 | 0.0357 | 0.0445 |
| Example 2 | 0.0247 | 0.0567 | 0.077 |
| Comparative Example 1 | 0.018 | 0.02965 | 0.0366 |

As shown in Table 1, the ionic conductive membranes of Examples 1 and 2 have better ionic conductivity than Comparative Example 1. The ionic conductive membranes of Examples 3 through 8 also show a similar ionic conductivity to those of Examples 1 and 2.

Ionic conductivity was measured for the reinforced composite ionic conductive polymer membrane of Example 9 by the 4-point probe method at 25°C, 50°C, and 75°C. The results are shown in Table 2.

**Table 2**

| Example 9 | Temperature | Ionic Conductivity (S/cm) |
|---|---|---|
| Reinforced composite ionic conductive polymer membrane | 25°C | 0.107 |
| | 50°C | 0.117 |
| | 75°C | 0.140 |
| Microporous support | | 4.63 × 10⁻³ |

As shown in Table 2, the microporous carboxylated PE support used in Example 9 has an ionic conductivity of 4.63 × 10⁻³ S/cm. The reinforced composite ionic conductive polymer membrane of Example 9 shows good ion conductivity at 25°C, 50°C, and 75°C.

### Example 12

A PEMFC was manufactured by disposing the reinforced composite ionic conductive polymer membrane of Example 1 between a Pt cathode and a Pt anode to form a single cell.

### Examples 13 through 17

PEMFCs were manufactured in the same manner as in Example 12, except that the reinforced composite ionic conductive polymer membranes of Example 2 through 8 were used for Examples 13 through 17, respectively.

### Example 18

A DMFC was manufactured by interposing the reinforced composite ionic conductive polymer membrane of Example 9 between a PtRu anode and a Pt cathode.

### Examples 19 and 20

DMFCs were manufactured in the same manner as in Example 18, except that the reinforced composite ionic conductive polymer membranes of Examples 10 and 11 were used for Examples 19 and 20, respectively.

### Comparative Example 2

A PEMFC was manufactured in the same manner as Example 12, except that the reinforced composite ionic conductive polymer membrane of Comparative Example 1, instead of the membrane of Example 9, was used.

### Comparative Example 3

A DMFC was manufactured in the same manner as in Example 18, except that the reinforced composite ionic conductive polymer membrane of Comparative Example 1, instead of the membrane of Example 9, was used.

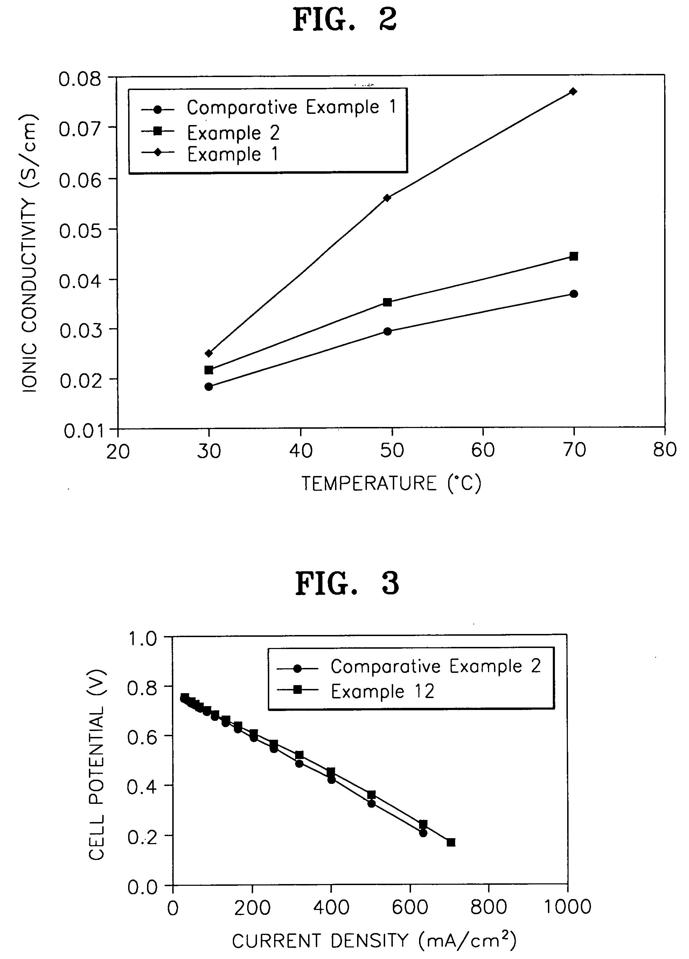

Cell efficiency was evaluated for the PEMFCs manufactured in Example 12 and Comparative Example 2 by measuring variations in cell potential with respect to current density. The results are shown in FIG. 3.

Referring to FIG. 3, cell potential per current density is greater for the PEMFC of Example 12 than the PEMFC of Comparative example 2. Thus, the PEMFC of Example 12 has better cell efficiency than the PEMFC of Comparative Example 2. As a result of cell efficiency evaluation performed on the PEMFCs of Examples 13 through 17 using a similar method, the PEMFCs of Examples 13 through 17 shows almost the same cell efficiency as the PEMFC of Example 12.

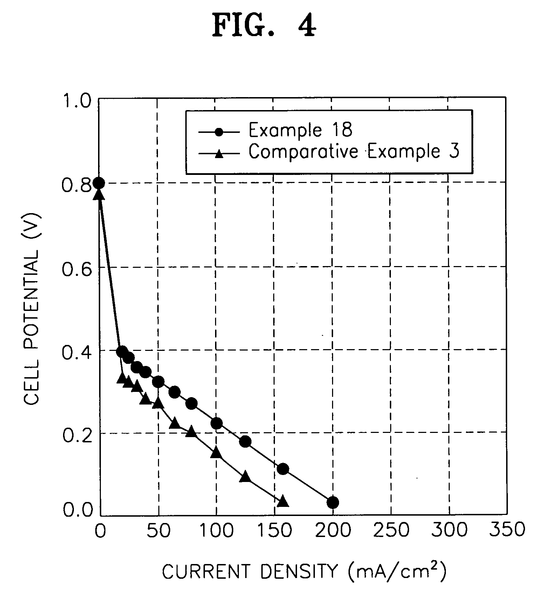

Variations in cell potential with respect to current density were evaluated for the DMFCs of Example 18 and Comparative Example 3. The results are shown in FIG. 4. Referring to FIG. 4, the DMFC of Example 18 shows better cell efficiency than the DMFC of Comparative Example 3.

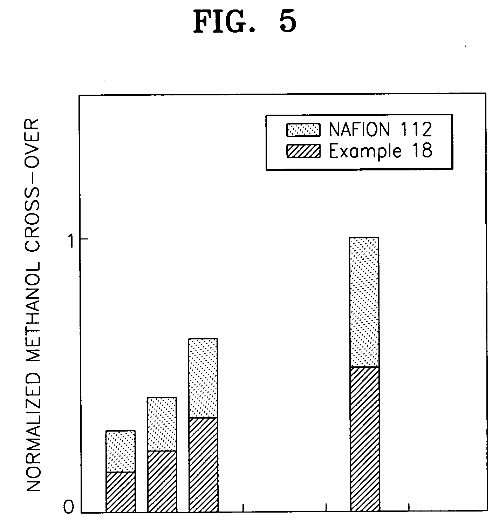

Meanwhile, methanol cross-over rate was determined for the DMFC of Example 18 by measuring the amount of CO₂ produced at the cathode. The result is shown in FIG. 5. The cross-over rate was also measured for Nafion 112 membrane available from DuPont for comparison with the DMFC of Example 18. Referring to FIG. 5, the methanol cross-over rate of the DMFC of Example 18 is much lower than that of Nafion 112. As a result of cross-over rate measurement performed on the DMFCs of Examples 19 and 20 using the same method as applied to the DMFC of Example 18, the DFMCs of Examples 19 and 20 are similar to the DMFC of Example 18.

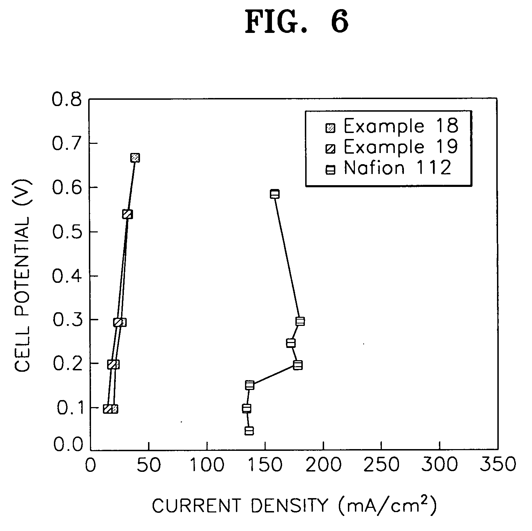

Cell efficiency was measured for the DMFCs of Examples 18 and 19 by calculating current density loss from methanol cross-over rate. The result is shown in FIG. 6. The lower the current density, the better the cell efficiency. Nafion 112 was also used for comparison. Referring to FIG. 6, the DMFCs of Examples 18 and 19 show good cell efficiency with lower current density than Nafion 112.

The reinforced composite ionic conductive polymer membrane according to the present invention has improved moisture retention, and thus drying of the polymer membrane at high temperature can effectively be prevented while keeping excellent ionic conductivity. The reinforced composite ionic conductive polymer membrane can easily be processed as a film. A fuel cell with improved cell efficiency can be manufactured with the reinforced composite ionic conductive polymer membrane. The reinforced composite ionic conductive polymer membrane is effective in suppressing methanol cross-over in DMFCs.

While this invention has been particularly shown and described with reference to preferred embodiments thereof, it will be understood by those skilled in the art that various changes in form and details may be made therein without departing from the spirit and scope of the invention as defined by the appended claims.

## Claims

1. A reinforced composite ionic conductive polymer membrane with a porous support, **characterized by**
an ion-exchange polymer that impregnates the porous support; and
a reinforcing agent that impregnates the porous support, the reinforcing agent being at least one selected from the group consisting of a moisture retentive material and a catalyst for facilitating oxidation of hydrogen.

2. The reinforced composite ionic conductive polymer membrane of claim 1, **characterized in that**
the moisture retentive material comprises at least one selected from the group consisting of SiO₂, TiO₂, ZiO₂, mordenite, tin oxide, and zeolite, and the catalyst comprises at least one selected from the group consisting of platinum (Pt), palladium (Pd), ruthenium (Ru) rhodium (Rh), iridium (Ir), gold (Au), and a Pt/Ru alloy.

3. The reinforced composite ionic conductive polymer membrane of claim 1 or 2, **characterized in that**
when both the moisture retentive material and the catalyst are used as the reinforcing agent, the moisture retentive material of 30-90% by weight and the catalyst of 10-97% by weight are used.

4. The reinforced composite ionic conductive polymer membrane of one of the preceding claims, **characterized in that**
the ion-exchange polymer includes at least one selected from the group consisting of sulfonic acid group, carboxyl group, phosphoric acid group, and perchloric acid group, as a reactive site and has an equivalent weight of 600-1200 g/H⁺.

5. The reinforced composite ionic conductive polymer membrane of one of the preceding claims, **characterized in that**
the porous support comprises at least one polymer membrane having a 30% or more porosity selected from the group consisting of polytetrafluoroethylene, vinylidene-fluoride-hexafluoropropylene copolymer, polypropylene, polyethylene, and polysulfone.

6. The reinforced composite ionic conductive polymer membrane of one of the preceding claims, **characterized in that**
at least one functional group selected from the group consisting of carboxyl group, sulfonic acid group, phosphoric acid group, and perchloric acid group is incorporated into the polymer membrane.

7. The reinforced composite ionic conductive polymer membrane of one of the preceding claims, **characterized by**
being formed by impregnating or spray-coating the porous support with a composition of the ion-exchange polymer and the reinforcing agent.

8. A fuel cell with a reinforced composite ionic conductive polymer membrane of one of the preceding claims.

9. A direct methanol fuel cell with the reinforced composite ionic conductive polymer membrane of one of claims 1 to 7.

10. The direct methanol fuel cell of claim 9, wherein the porous support of the direct methanol fuel cell comprises at least one polymer membrane having a 30% or more porosity and a proton exchange functional group, and being selected from the group consisting of polytetrafluoroethylene, vinylidenefluoride-hexafluoropropylene copolymer, polypropylene, polyethylene, and polysulfone.

11. The direct methanol fuel cell of claim 9 or 10, wherein the proton exchange functional group is at least one selected from the group consisting of carboxyl group, sulfonic acid group, phosphoric acid group, and perchloric acid group.
